(19) 

**Europäisches Patentamt**
**European Patent Office**
**Office européen des brevets**

(11) **EP 4 335 895 A1**

(12) **EUROPEAN PATENT APPLICATION**

(43) Date of publication:
**13.03.2024 Bulletin 2024/11**

(21) Application number: **22194398.8**

(22) Date of filing: **07.09.2022**

(51) International Patent Classification (IPC):
**C08J 9/42** *(2006.01)*        **C08J 9/36** *(2006.01)*
**C08J 9/40** *(2006.01)*

(52) Cooperative Patent Classification (CPC):
**C08J 9/365; C08J 9/40;** C08J 2361/28;
C08J 2375/04; C08J 2461/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Armacell Enterprise GmbH & Co. KG
12529 Schönefeld OT Waltersdorf (DE)**

(72) Inventors:
• **SOMBERG, Patric
48167 Münster (DE)**

• **HOLUB, Pavel
48143 Münster (DE)**
• **MÖLLER, Stephan
48167 Münster (DE)**
• **ZHENG, Zhicheng
48161 Münster (DE)**

(74) Representative: **Vossius & Partner
Patentanwälte Rechtsanwälte mbB
Siebertstraße 3
81675 München (DE)**

(54) **COMPOSITE ARTICLE COMPRISING AEROGEL PARTICLES AND A FOAM**

(57) The present invention relates to a method for the preparation of a composite article comprising aerogel particles and a foam as well as to a composite article obtainable by this method.

**EP 4 335 895 A1**

## Description

The present invention relates to a method for the preparation of a composite article comprising aerogel particles and a foam as well as to a composite article obtainable by this method.

In many industrial and construction applications thermal insulation capability and temperature resistance at high temperatures are required. In view of the prior art, the present invention serves to provide foams with improved thermal insulation capability and temperature resistance at reduced costs.

The present inventors surprisingly found that this problem can be solved by incorporating aerogel into foams after the foams have been formed. This can be achieved by preparing an aerogel composition comprising an aerogel powder and an organic solvent and impregnating, soaking, or injecting it into the foam.

Including aerogel in the base material of foams is very difficult due to several issues. Firstly, in reactive foaming (such as for PUR foams, melamine foams, phenolic foams, etc.), the very high surface area of aerogel particles leads to a dramatic increase of the viscosity of the reaction system. Therefore, a loading level of aerogel of more than 10 wt% does not allow a reliable foam process. Furthermore, in thermoplastic foaming, the aerogel particles induce significant nucleation during the foaming process. Therefore, a comparable loading level of aerogel as in the present invention has not been achievable in the prior art when aerogel particles were included in the base material for the foams before foaming.

Thus, in a first aspect, the present invention relates to a method for the preparation of a composite article comprising aerogel particles and a foam, the method comprising:

- providing a foam-containing article comprising a foam,
- providing an aerogel composition comprising an aerogel powder and an organic solvent (A),
- combining the foam-containing article and the aerogel composition, and
- partially or completely removing the organic solvent (A) to obtain the composite article.

The present invention furthermore relates to a composite article obtainable by this method.

In addition, the invention relates to a composite article comprising aerogel particles and a foam, wherein the composite article is obtainable by impregnating, soaking, or injecting an aerogel composition comprising an aerogel powder and an organic solvent (A), and optionally inorganic opacifiers and/or mineral fillers, into a foam-containing article comprising a foam, and partially or completely removing the organic solvent (A) to obtain the composite article.

In still a further aspect, the present invention relates to a composite article comprising aerogel particles and a foam, wherein one or more of the following requirements (i) to (v) are fulfilled:

(i) the weight ratio of the one or more aerogels to the one or more foams (aerogel/foam) in the composite article is 1:8 or higher;

(ii) the composite article has a thermal conductivity at 0°C of not higher than 0.030 W/m·K. Preferably, the thermal conductivity at 0°C is not higher than 0.028 W/m·K, more preferably not higher than 0.026 W/m·K, even more preferably not higher than 0.024 W/m·K, still more preferably not higher than 0.022 W/m·K;

(iii) the composite article has a thermal conductivity at 20°C of not higher than 0.032 W/m·K. Preferably, the thermal conductivity at 20°C is not higher than 0.030 W/m·K, more preferably not higher than 0.028 W/m·K, even more preferably not higher than 0.026 W/m·K, still more preferably not higher than 0.024 W/m·K;

(iv) the composite article has a thermal conductivity at 40°C of not higher than 0.034 W/m·K. Preferably, the thermal conductivity at 40°C is not higher than 0.032 W/m·K, more preferably not higher than 0.030 W/m·K, even more preferably not higher than 0.028 W/m·K, still more preferably not higher than 0.026 W/m·K.

(v) the composite article has a burn-through time of 10 minutes or more, wherein the burn-through resistance is determined using the composite article in the form of a 16 cm x 16 cm sheet with a thickness of 8 mm and treating the composite article at the centre of its first major surface by using a propane gas burner (flame source defined in DIN EN ISO 11925-2, Ignitability of products subjected to direct impingement of flame - Part 2: Single-flame source test), wherein the burn-through time is the duration from start of the flame treatment until the flame reaches centre of the second major surface.

The thermal conductivity as referred to herein is measured according to the standard DIN EN 12667 preferably by using the heat flow meter method with a LaserComp Fox 200 device with a specimen having a dimension of 20x20 cm.

BRIEF DESCRIPTION OF THE FIGURES

Fig. 1:                Thermal conductivity values of Comparative Example 1 and Examples 1 to 3

Fig. 2:          Photographs of Examples 2, 4 and 5

Fig. 3:          The filled foams show a surprisingly high degree of flexibility (fig. 3b) with almost no difference to the unfilled (fig. 3a) foam as a reference (Example 4).

Fig. 4:          No significant dust emissions are observable when bending the filled foam samples: Micrographs of Example 2 show the high degree of filling and the aerogel agglomeration behavior (fig. 4b) vs. the unfilled reference (fig. 4a):

Fig. 5:          Photographs of Example 2 taken after exposure to direct flame. Flame penetration is significantly hindered in the filled foam, no burn-through occurs even after 10 min. of direct exposure:

Fig. 5a and 5c:  unfilled foam (Comparative Example 1): with burn through after exposure to direct flame, (5a: flamed side; 5c: non-exposed side).

Fig. 5b and 5d:  filled foam (Example 2): no burn through even after 10 min, (5b: flamed side; 5d: non-exposed side).


DEFINITION OF THE TERMS USED HEREIN

In the context of the present invention, the term "composite article" is to be understood as referring to any article which comprises one or more aerogel particles and one or more foams. Thus, the term "composite" does not imply any limitations other than the presence of aerogel particles and a foam, which together form the foam-containing article. It is to be understood that the aerogel particles and the foam are not spatially distant. Rather, the aerogel particles are typically inside the foam.

The composite article is typically in the form of a foam sheet, tube or any other molded shape. The composite article preferably has a thickness in the range of 3 mm to 500 mm, preferably in the range of 3 to 100 mm, more preferably in the range of 3 to 50 mm, even more preferably in the range of 5 to 30 mm. The extension in the other two dimensions is preferably each at least 5 times the thickness. It is to be understood that the term "dimension" as used herein refers to the three known space dimensions which are orthogonal to each other (such as understood in "3-dimensional").

As used herein, the term "sheet" typically refers to a foam-containing article which extends into one dimension less than in the other two dimensions. Preferably, it refers to a foam-containing article which extends in one dimension only up to 1000 mm, preferably up to 500 mm, more preferably up to 100 mm, while extending at least 5 times as much in each of the other two dimensions. In other words, the term "sheet" typically refers to flat articles, or oblong articles.

Unless otherwise explicitly indicated, the use of singular or plural forms should be understood as allowing the presence of "one or more" of the nouns being in singular or plural form. In particular, the term "article comprising a foam" refers to an "article comprising one or more foams". Similarly, the term "aerogel composition comprising an aerogel powder and an organic solvent" is to be understood as also including the case where more than one (type of) aerogel powder and/or more than one (type of) organic solvent are comprised in the aerogel composition. Mixtures of different types of aerogel powders and/or mixtures of different types of organic solvents may be used.

As used herein, the term "melamine-formaldehyde resin" or "melamine-formaldehyde binder" refers to oligomers (or mixtures of oligomers) primarily (typically at least 50 wt.-%) obtained from melamine and formaldehyde with formaldehyde acting as a crosslinker. The melamine reacts with formaldehyde typically under alkaline conditions to form mixtures of various oligomers also referred to as methylolmelamines. Thus, "melamine-formaldehyde resin" or "melamine-formaldehyde binder" preferably relate to oligomers containing at least 50 wt.-%, preferably 60 wt.-%, more preferably 70 wt.-%, even more preferably 80 wt.-%, still more preferably 90 wt.-% or even 95 or 98 wt.-% atoms obtained from the reaction of melamine and formaldehyde. Such oligomers are able of undergoing further condensation upon additional heating or readily react with thiol, hydroxyl, carboxyl and amide groups to form three-dimensional thermoset polymer networks. Due to its oligomeric characteristic, it is soluble in water or mixtures of water and organic solvent (i.e. the solubility is preferably higher than 5 g/l in a 1:1 by wt. mixture of water and 2-propanol at 20°C). In Differential Scanning Calorimetry (DSC), an exothermic enthalpy in the temperature range of 100-200°C is typically seen in the DSC thermogram of the "melamine-formaldehyde resin" or "melamine-formaldehyde binder" (preferably, an enthalpy integral in this range is 10 J·g$^{-1}$ or more). A "melamine-formaldehyde resin" or "melamine-formaldehyde binder" is typically used in the methods of production of the present invention, while the final products typically contain the crosslinked product thereof, which is herein referred to as a "melamine resin" or "crosslinked melamine-formaldehyde resin".

As used herein, the term "melamine resin" or "crosslinked melamine-formaldehyde resin" refer to polymers which can be obtained by crosslinking a "melamine-formaldehyde resin" or "melamine-formaldehyde binder". The crosslinking may also be referred to as "curing" and typically refers to heating to a temperature of at least 100°C, typically to a temperature of 120 to 180°C for 1 to 8 hours. Thus, "melamine resin" or "crosslinked melamine-formaldehyde resin" preferably relate to polymers containing at least 50 wt.-%, preferably 60 wt.-%, more preferably 70 wt.-%, even more preferably 80 wt.-%, still more preferably 90 wt.-% or even 95 or 98 wt.-% atoms derived from the reaction of melamine and formaldehyde. A "melamine resin" or "crosslinked melamine-formaldehyde resin" is typically a crosslinked material and cannot be dissolved in water nor mixtures of water and organic solvent (i.e. the solubility is preferably lower than 5 g/l in a 1:1 by wt. mixture of water and 2-propanol at 20°C). Due to the crosslinked nature, an exothermic enthalpy in the temperature range of 100-200°C is typically not seen (preferably, an enthalpy integral in this range is not higher than 10 J·g$^{-1}$) in the DSC thermogram of the "melamine resin" or "crosslinked melamine-formaldehyde resin". The definition of "melamine resin" also applies to the melamine in melamine foams.

As used herein, the term "aerogel" refers to a porous material derived from a gel, in which the liquid component of the gel has been replaced with a gas essentially without collapse of the gel structure. Preferably, the "aerogel" is a silica aerogel. Such silica aerogels typically have a density of 0.1 g/cm$^3$ or less, preferably 0.05 g/cm$^3$ or less, and can be prepared by the well-known Stöber process. In the present invention, the "aerogel" is preferably a silica aerogel which is obtainable according to the process described in EP 2 722 311 A2, preferably as defined in claim 22 thereof.

In the present invention, the term "aerogel particle" preferably refers to silica aerogel particles which are obtainable according to the process described in EP 2 722 311 A2, preferably as defined in claim 22 thereof. Aerogel particles suitable for use in the present invention are, e.g., commercially available as "Jios AeroVa", wherein the "D20 Grade" is preferred. "Jios AeroVa D20 Grade" is described as having a D95 particle size range of less than 20 μm, a bulk density of 0.03 to 0.1 g/cm$^3$, a thermal conductivity of 0.017 to 0.022 W/m·k, a surface area of 600 to 800 m$^2$/g, and a porosity of more than 90%.

The term "heterophase reaction" preferably refers to any reaction conducted in a system containing more than one phase e.g. in a system composed of two non-mixable phases i.e. an aqueous phase and a phase which is not mixable with the aqueous phase, which is preferably a non-polar solvent phase. The reactions i.e. the creation of the first structures start at the interface between the different phases. Accordingly, it does not relate to reactions in which all reactants are dissolved in the same solvent. An example of a "heterophase reaction" is an emulsion reaction, suspension reaction or dispersion reaction.

The term "foam-containing article" refers to any article comprising one or more foams. Examples therefore include foam sheets, tubes or any other moulded articles. The foam-containing article preferably has a thickness in the range of 3 mm to 500 mm, preferably in the range of 3 to 100 mm, more preferably in the range of 3 to 50 mm, even more preferably in the range of 5 to 30 mm, while extending at least 5 times as much in each of the other two dimensions. Preferably, the "foam-containing article" is a foam.

As used herein, the term "aerogel composition" relates to any mixture comprising an aerogel powder and an organic solvent. Preferably, the "aerogel composition" is a mixture comprising the aerogel powder dispersed in an organic solvent. In other words, the "aerogel composition" is preferably an "aerogel dispersion".

The term "dispersion" as used herein preferably relates to a mixture wherein solid particles of one material are dispersed in a continuous phase of another material which is liquid. The terms solid and liquid as used herein refer to the state of a material at a temperature of 25°C and a pressure of 1 atm. Being "dispersed" preferably describes a state where the particles do not readily settle in the continuous phase of the liquid.

As used herein, the term "organic solvent" refers to any organic compound which is liquid at a temperature of 20°C and a pressure of 1 atm. Preferred examples of organic solvents include hydrocarbon solvents and alcohols including any mixtures thereof. Hydrocarbons are understood to be organic compounds consisting of carbon and hydrogen atoms.

It is to be understood that the term "removing the organic solvent" preferably also includes removing water and may furthermore include curing (typically crosslinking) of a melamine-formaldehyde resin.

The term "organic compound" as used herein relates to any compounds containing at least one carbon-hydrogen bond. When calculating the content of organic compounds in the products of the present invention, the foam material and any melamine-formaldehyde resin is preferably not regarded as an organic compound.

Terms such as "comprise" or "contain", such as in "A comprises B", are used herein to express an open definition of a composition etc. Accordingly, "A comprises B" is to be understood as indicating that A comprises at least B but may furthermore contain any number and amount of other components. In contrast, the term "consists of" such as in "A consists of B" typically indicates that A does not contain components other than B.

Terms such as "preferably" indicate that a certain feature may or may not be fulfilled. Such terms therefore precede optional features. Generally, if the feature is fulfilled, it is expected that additional beneficial effects may result.

The term "injecting" as used herein refers to the action of introducing (typically with force) a fluid (such as the aerogel composition) into a solid material (such as the foam-containing article). A suitable approach for "injecting" is, e.g., described in EP 3 023 528 A1.

The term "impregnating" or "soaking" as used herein refers to the action of introducing (typically without force) a fluid (such as the aerogel composition) into a solid porous material (such as the foam). The "impregnating" or "soaking" can for example be achieved either by placing the foam-containing article to be impregnated or soaked in a container which contains the typically liquid material with which the article is to be impregnated or in a way that the liquid is poured over the article to be impregnated or soaked.

As used herein, the term "binder" relates to any materials which are intended to provide adhesion between two solid materials. Preferably, the term "binder" relates to any materials which serve to bind aerogel particles to each other and/or to the foam. The binders may be of organic or inorganic nature. Particular examples of binders include, but are not limited, to water glass, silicone-based binders and phenolic resin-based binders.

DETAILED DESCRIPTION OF THE PRESENT INVENTION

The present invention relates to a method for the preparation of a composite article comprising aerogel particles and a foam as well as to a composite article obtainable by this method.

The method

The present invention concerns a method for the preparation of a composite article comprising aerogel particles and a foam, the method comprising:

- providing a foam-containing article comprising a foam,
- providing an aerogel composition comprising an aerogel powder and an organic solvent (A),
- combining the foam-containing article and the aerogel composition, and
- partially or completely removing the organic solvent (A) to obtain the composite article.

The method is not limited to these steps and may include any number of additional steps before, between and after each of these steps. The steps mentioned above are thus not necessarily consecutive steps. However, it is preferred that they be conducted in the order specified. Furthermore, it is preferred that the steps be consecutive.
The steps of the method described herein may each include additional activities. For example, the step of providing an aerogel composition comprising an aerogel powder and an organic solvent (A) may include providing the aerogel composition containing additional components other than the aerogel powder and the organic solvent (A). Furthermore, the step of combining the foam-containing article and the aerogel composition may include combining not only the foam-containing article and the aerogel composition but further articles, compositions etc.
The foam-containing article and the aerogel composition are preferably combined by injecting, soaking or impregnating the aerogel composition into the foam-containing article, more preferably by impregnating or soaking the aerogel composition into the foam-containing article. Suitable methods for injecting such a composition are known to the skilled person and, e.g., described in EP 3 023 528 A1.
Preferably, the partially or completely removing the organic solvent (A) to obtain the composite article by drying includes drying at a temperature of 50 to 150°C for 1 to 8 hours, preferably drying at 100°C to 120°C for 1 to 48 hours.

The composite article to be obtained by the method

The composite article obtainable by the method of the present invention preferably contains 50 to 98 wt.-% aerogel based on the total weight of the composite article. More preferred is 60 to 96 wt%, still more preferred is 70 to 95 wt%, or even 75 to 95 wt.%, 80 to 95 wt.% or 85 to 95 wt.%, such as 88 to 92 wt.% aerogel based on the total weight of the composite article.
The thickness of the composite article is typically in the range of 3 mm to 500 mm, preferably in the range of 3 to 100 mm, more preferably in the range of 3 to 50 mm, even more preferably in the range of 5 to 30 mm.
When the width of the composite article is W, the length of the composite article is L and the thickness of the composite article is T, the following requirement is preferably fulfilled by the composite article:

$$R = \frac{W \times L}{T^2}$$

wherein R is 100 or more, preferably 1000 or more, more preferably 10000 or more,
wherein W/L is preferably in a range of 1000/1 to 1/1000,
wherein W/T is preferably 10 or more, and
wherein L/T is preferably 10 or more.

The composite article may further comprise inorganic opacifiers and/or mineral fillers. Accordingly, it is preferred that the step of providing an aerogel composition comprising an aerogel powder and an organic solvent (A), is a step of providing an aerogel composition comprising an aerogel powder and an organic solvent (A) and inorganic opacifiers and/or mineral fillers.

The foam

The foam used in the method of the present invention is typically a foam in which at least half (i.e. 50% or more) of the cells are interconnected. This continuous interconnected capillary network allows liquids and gases to move through the open or porous cell structures. The proportion of open cells of the foam is preferably 60 to 99 %, in particular 85 to 95 % or 90 to 99 %. The foam preferably has an open-cell content according to ASTM D2856 of 40 to 99%. The foam preferably comprises one or more selected from polyurethane (PUR) foams, polyisocyanurate (PIR) foams, melamine foams, phenolic foams, chemically crosslinked polyolefin foams, polypropylene foams and mixtures thereof. Among these, melamine foams are particularly preferred.

Polyurethane (PUR) foams

Flexible polyurethane (PUR) foams are in particular disclosed in WO 1996/001867 A1. Such flexible open-cell polyurethane foams can thus be prepared as a reaction product of a mixture comprising (a) an aliphatic, cycloaliphatic, araliphatic, and/or aromatic polyisocyanate, and (b) a polyol component. Component (a) is typically MDI or polymeric MDI. As the polyol component, any compound having more than one, preferably more than two hydroxy groups can be uses. Examples include ethylene glycols, propylene glycols, 1,4-butanediol, or 1,6-hexane diol. The polyols may furthermore be polyether polyols, polyester polyols and/or polyamide polyols. Polyester polyols for polyurethanes can be prepared by the condensation reaction between glycols (such as ethylene glycols, propylene glycols, 1,4-butanediol, or 1,6-hexane diol) and a dicarboxylic acid. Polyol components with 4 to 8 hydroxyl groups include erythritol, pentaerythritol; Pentites such as arabite, adonite or xylitol; hexites, such as sorbitol, mannitol or dulcitol. Low molecular weight reaction products of polyhydroxy compounds, such as set out above, with ethylene oxide and/or propylene oxide can be used particularly well, as can the low molecular weight reaction products of other compounds which contain groups capable of reacting with ethylene and/or propylene oxide, e.g. polyamines, such as ammonia, ethylenediamine, 1,4-diaminobenzene, 2,4-diaminotoluene, 2,4'-diaminodiphenylmethane, 4,4'-diaminodiphenylmethane, 1-methyl-3,5-diethyl-2,4 diaminobenzene and/or 1-methyl-3,5-diethyl-2,6-diaminobenzene. Other suitable polyamines are described in EP-A-0 265 781.

Suitable crosslinking agents include triethanolamine and reaction products of an aldehyde or a ketone with a polyamine (such as ethylenediamine (EDA), diethylenetriamine (DETA), triethylenetetramine (TETA), tetraethylenepentamine (TEPA), pentaethylenehexamine (PEHA), hexaethyleneheptamine, propylenediamine, dipropylenetriamine, tripropylenetetramine, tetrapropylenepentamine, pentapropylenehexamine or hexapropyleneheptamine).

Polyisocyanurate (PIR) foams

Polyisocyanurate (PIR) foams are described, e.g., in WO 2020/142887 A1. Similar to polyurethane (PUR) foam and PIR are typically obtained by the reaction of isocyanate (MDI) and polyol. While for PUR, the components MDI and polyol are used at a molar ratio of about 1.00, during the production of PIR MDI is used at a molar excess (e.g. 1.01:1 or more, 1.03:1 or more, 1.05:1 or more, 1.10:1 or more, or even 1.2:1 or more). The polyols and crosslinking agents may be as described above for polyurethane foams.

Melamine foams

Melamine foams are polymers obtained by the reaction of melamine (2,4,6-triamino-1,3,5-triazine) with one or more aldehydes. The aldehyde(s) is typically one or more selected from formaldehyde, acetaldehyde, trimethylolacetaldehyde, acrolein, benzaldehyde, furfuraldehyde, glyoxal, phthalaldehyde and terephthalaldehyde; and preferably contains at least 50wt.% formaldehyde, more preferably the aldehyde is formaldehyde. Thus, preferred melamine foams are foams containing polymers obtained by the reaction of melamine (2,4,6-triamino-1,3,5-triazine) with formaldehyde. Melamine foams such as described in US 4,334,971 and DE 10 2010 009588 A1 can be used. Thus, elastic open-cell melamine-formaldehyde resin foams can, e.g., be prepared as described in EP-A 071 672 or EP-A 037 470. The molar ratio of melamine to aldehyde (e.g. formaldehyde) is generally less than 1:1, and is preferably between 1:1 and 1:5, particularly between 1:1.5 and 1:3.5.

Melamine-formaldehyde precondensates may be used for the preparation of the melamine foams. Such melamine-formaldehyde precondensates, in addition to melamine, typically contain up to 50% by weight, preferably up to 20% by weight, of other thermoset resin precursors as co-condensed units, and may, in addition to formaldehyde, contain up to 50% by weight, preferably up to 20% by weight, of other aldehydes as co-condensed units, though an unmodified melamine-formaldehyde condensate is particularly preferred. Examples of additional thermoset resin precursors which may be present are alkyl-substituted melamine, urea, urethanes, carboxylic acid amides, dicyandiamide, guanidine, sulfurylamide, sulfonic acid amides, aliphatic amines, phenol and its derivatives. Examples of other aldehydes which may be employed are acetaldehyde, trimethylolacetaldehyde, acrolein, benzaldehyde, furfuraldehyde, glyoxal, phthalaldehyde and terephthalaldehyde. Further details concerning melamine-formaldehyde condensates may be found in Houben-Weyl, Methoden der organischen Chemie, Volume 14/2, 1963, pages 319-402. The thermoset resin precursor: aldehyde molar ratio may vary within wide limits, namely from 1:1.5 to 1:5; in the case of melamine-formaldehyde condensates, it is preferably from 1:2.5 to 1:3.5. The melamine resins advantageously contain co-condensed sulfite groups; these may be introduced, for example, by adding from 1 to 20% by weight of sodium bisulfite during or after the condensation of the resin. The sulfite groups make the resin more hydrophilic and hence more compatible with water. Furthermore, higher degrees of condensation can thereby be achieved. Using such melamine-formaldehyde precondensates, the desired foams can then be prepared, e.g., by foaming an aqueous or alcoholic (such as ethanolic) solution or dispersion which contains the melamine-formaldehyde precondensate, an emulsifier, a blowing agent and a hardener, optional additives, and then crosslinking the precondensate, wherein, to affect foaming and crosslinking, the solution or dispersion is heated. Heating can be affected by ultra-high-frequency irradiation in such a manner that the power uptake by the solution or dispersion is from 5 to 200 KW per kg of water or alcohol in the solution or dispersion.

Phenolic foams

Suitable phenolic foams can, e.g. be found in WO 2007/029222 A1. Phenolic foams comprise a phenolic resin. Phenolic resins can be obtained from the reaction of phenol and/or a phenolic compound (preferred phenolic compounds are selected from cresol, xylenol, para-$C_{1-6}$-alkylphenol, para-phenylphenol, or resorcinol) with an aldehyde (preferred aldehydes are formaldehyde, furfural, or acetaldehyde). Typical phenolic resins include resole resins and novolac resins.

An alkaline catalyst (such as sodium hydroxide, potassium hydroxide, calcium hydroxide, or an aliphatic amine like trimethylamine, or triethylamine) is typically used for the production of resole resins. The molar ratio of phenol groups (hydroxyl groups attached to a carbon which is part of an aromatic group) to aldehyde groups is not especially limited. In particular in the case of resole resins, is preferred that the molar ratio of phenol groups to aldehyde groups is in the range from 1 : 1 to 1 : 3, more preferably from 1 : 1.5 to 1 : 2.5, and particularly preferable is 1 : 1.6 to 1 : 2.1.

For the preparation of novolac resins, an acid catalyst (such as benzenesulphonic acid, para-toluenesulphonic acid, xylenesulphonic, naphthalenesulphonic acid, ethylbenzenesulphonic acid or phenolsulphonic acid) is typically used. In particular in the case of novolac resins, is preferred that the molar ratio of phenol groups to aldehyde groups is in the range from 1 : 1 to 3 : 1, more preferably from 1.05 : 1 to 2.5 : 1, and particularly preferable is 1.2 : 1 to 1.5 : 1.

The phenolic resins can be either formed directly to produce a thermosetting network polymer (typically in the case of an excess of aldehyde groups), or by preparing a prepolymer (typically in the case of an excess of phenolic groups, such as in the case of novolac). The prepolymer can then be moulded and cured by the addition of additional formaldehyde and preferably heating.

The phenolic foam preferably comprises, in addition to the phenolic resin, a hydrocarbon blowing agent (preferably one or more hydrocarbons having from 1 to 8 carbon atoms; e.g. at 1 to 20 parts by weight relative to 100 parts by weight of phenolic resin), any catalyst(s). Optionally, an inorganic filler (e.g. metal hydroxides such as aluminium hydroxide, magnesium hydroxide; metal carbonates such as calcium carbonate, magnesium carbonate, barium carbonate, zinc carbonate; e.g. at from 0.1 to 30 parts by weight relative to 100 parts by weight of phenolic resin) to regulate the pH of the foam to avoid corroding metallic structures when they are in prolonged contact with the phenolic foam.

Chemically crosslinked polyolefin foams

Chemically crosslinked polyolefin foams are, for example described in WO 2006/024658 A1. Thus, chemically crosslinked polyolefin foams preferably contain 50 to 95% by weight of polyolefins and 5 to 50% by weight of polystyrene. A preferred example of chemically crosslinked polyolefin foams are chemically crosslinked PE (XLPE) foams.

The proportion of polystyrene in the chemically crosslinked polyolefin foam is preferably at most 50% by weight, but can be adjusted within wide limits. Preferred quantity ratios of polyolefin and polystyrene are 60 and 40 wt.%, 70 and 30 wt.%, 80 and 20 wt.%, 90 and 10 wt.%, respectively.

The polyolefins used are in particular polyethylene and/or polypropylene, in each case as homopolymer, copolymer or polymer blend. Mixtures of several different polystyrenes, polyethylenes and/or polypropylenes, e.g. with different molecular weights or melt flow indices, can also be used.

The polymeric components are used in particular without prior functionalization or compatibilization, such as grafting with silanes or monomers such as styrene or methacrylate, etching, irradiation, flame treatment or corona treatment.

Preferably, polymer foams according to the invention do not contain any other polymers in addition to the polymer components (polyolefin and polystyrene), so that the above-mentioned weight fractions of polyolefin and polystyrene add up to 100% of all polymer components of the foam. Optionally, it is possible to add small proportions of 1 to 10 wt.% of further polymers such as polyethylene vinyl acetate, polyethylene ethyl acetate, polyethylene vinyl butyral, hydrogenated polystyrene and/or polybutene.

A suitable crosslinking agent may be selected from organic peroxides and/or with triallyl isocyanurate being applied as coagent.

Polypropylene foams

Suitable polypropylene foams are known to the skilled present and are disclosed in WO 1994/013460 A1. Suitable propylene polymers include propylene homopolymers (polypropylene) and copolymers of propylene and copolymerizable ethylenically unsaturated comonomers. The propylene polymer foam may further include non-propylenic polymers in small amounts (typically not more than 10 wt.%, preferably not more than 5 wt.%). The propylene polymers may be comprised solely of one or more propylene homopolymers, one or more propylene copolymers, a blend of one or more of each of propylene homopolymers and copolymers. Regardless of composition, the propylene polymers preferably contain more than 50 wt.%, more preferably at least 70 wt.% of propylene monomeric units, based on the total weight of monomer units in the propylene polymer(s).

Suitable monoethylenically unsaturated comonomers include olefins, vinylacetate, methylacrylate, ethylacrylate, methyl methacrylate, acrylic acid, itaconic acid, maleic acid, maleic anhydride. A propylene copolymer preferably comprises 20 wt.% or less of the ethylenically unsaturated comonomer.

Particularly useful propylene copolymers are copolymers of propylene with one or more nonpropylenic olefins. Propylene copolymers include random and block copolymers of propylene and an olefin selected from the group consisting of ethylene, C4-C10 $\alpha$-olefins, and C4-C10 dienes. Propylene copolymers also include random terpolymers of propylene and $\alpha$-olefins selected from the group consisting of ethylene and C4-C8 $\alpha$-olefins. In terpolymers having both ethylene and C4-C8 $\alpha$-olefins, the ethylene content is preferably 20 wt.% or less. The C4-C10 $\alpha$-olefins include linear and/or branched C4-C10 $\alpha$-olefins such as, for example, 1-butene, isobutylene, 1-pentene, 3-methyl-1-butene, 1-hexene, 3,4-dimethyl-1-butene, 1-heptene, and 3-methyl-1-hexene. Examples of C4-C10 dienes include 1,3-butadiene, 1,4-pentadiene, isoprene, 1,5-hexadiene, and 2,3-dimethyl-1,3-hexadiene.

Suitable non-propylenic polymers incorporatable in the polypropylene foam include high, medium, low, and linear density polyethylenes, polybutene, ethylene-acrylic acid copolymer, ethylene-vinyl acetate copolymer, ethylene-propylene rubber, styrenebutadiene rubber, ethylene-ethyl acrylate copolymer, and ionomer.

Preferred propylene polymer resins are polypropylene resins which are branched and/or cross-linked. Branching or cross-linking may be obtained by chemical or irradiation branching (cf. e.g. US 4,916,198 and US 4,714,716). Suitable branching/crosslinking agents include azido and vinyl functional silanes, organic peroxides and multifunctional vinyl monomers as described in WO 1994/013460 A1.

The foams to be used in the present invention are preferably chemically and/or physically crosslinked. The degree of crosslinking according to the gel content according to the Flory-Stockmayer theory or ASTM D2765 is preferably 40 to 95%. Suitable crosslinking agents can be selected by the skilled person based on the common general knowledge depending on the type of polymer, such as set out above. Additional crosslinking agents include peroxides, triallylcyanurate, triallylisocyanurate, phenylmaleimide, thiadiazoles, fatty acid amide, hydrosilylation agents, radiation activators (for radiation or UV curing), sulphur systems, bisphenolics, metal oxides etc.

Preferred blowing agents for preparing the foams include aliphatic hydrocarbons having 1 to 9 carbon atoms, halogenated aliphatic hydrocarbons having 1 to 4 carbon atoms, and aliphatic alcohols having 1 to 3 carbon atoms.

Aliphatic hydrocarbons include methane, ethane, propane, n-butane, isobutane, n-pentane, isopentane, neopentane. Among halogenated hydrocarbons, fluorinated hydrocarbons are preferred. Examples of fluorinated hydrocarbon include methyl fluoride, perfluoromethane, ethyl fluoride, 1,1-difluoroethane, 1,1,1-trifluoroethane, 1,1,1,2-tetrafluoro-ethane, pentafluoroethane, perfluoroethane, 2,2-difluoropropane, 1,1,1-trifluoropropane, perfluoropropane, perfluorobutane, perfluorocyclobutane. Examples of partially halogenated chlorocarbons and chlorofluorocarbons include methyl chloride, methylene chloride, ethyl chloride, 1,1,1-trichloroethane, 1,1-dichloro-1-fluoroethane, 1-chloro-1,1-difluoroethane, 1,1-dichloro-2,2,2-trifluoroethane and 1-chloro-1,2,2,2-tetrafluoroethane. Aliphatic alcohols include methanol, ethanol, n-propanol, and isopropanol. Mixtures of any of the above may be used as the blowing agent.

Suitable inorganic blowing agents include carbon dioxide, nitrogen, argon, water air, nitrogen, and helium. Chemical blowing agents include azodicarbonamide, azodiisobutyronitrile, benzenesulfonhydrazide, 4,4-oxybenzene sulfonylsemicarbazide, p-toluene sulfonyl semi-carbazide, barium azodicarboxylate, N,N'-dimethyl-N,N'dinitrosoterephthalamide, and trihydrazino triazine. It is to be understood that the crosslinking agents and the blowing agents, in particular chemical blowing agents, may be decomposed and/or evaporated from the foam during the process of foaming.

It is to be understood that the foams may include any additives commonly used in foams, such as flame retardants, inorganic fillers, plasticizers, biocides, stabilizers (against heat, UV, ozone, reversion etc.), pigments, of any kind in any ratio.

The foams (to be understood as being before impregnation and/or coating) preferably have a density of $\leq 200$ kg/m$^3$, more preferably $\leq 150$ kg/m$^3$, according to DIN EN ISO 845. In particular for melamine foams, density of $\leq 20$

kg/m$^3$ are preferred, more preferably $\leq$ 10 kg/m$^3$.

Specific examples of open-cell foams which can be used in the present invention include:

| Category | Supplier | Trade name | Density [kg/m$^3$] | Cell structure |
|---|---|---|---|---|
| Open-cell Polyurethane Foam | HANNO | Redusoft DI 150 | 150 | open-cell |
| | HANNO | Redusoft DI 150 FR | 150 | open-cell |
| | HANNO | Redusoft DI 80 | 80 | open-cell |
| Open-cell Phenolic Foam | ROBATEL Industries | FENOSOL | 200 | 87% open-cell |
| Open-cell Melamine Foam | BASF | Basotect B | 9 | open-cell |
| | BASF | Basotect UF+ | 7 | open-cell |
| | BASF | Basotect G+ | 9 | open-cell |
| | BASF | Basotect UL | 6 | open-cell |
| | BASF | Basotect TG | 9 | open-cell |
| | BASF | Basotect W | 9 | open-cell |

The solvent (A)

The organic solvent (A) used in the method of the present invention is typically a hydrocarbon solvent, preferably selected from C$_{3-16}$ saturated, unsaturated or partially saturated hydrocarbons or mixtures thereof, more preferably selected from C$_{3-10}$ saturated straight, branched or cyclic hydrocarbons or mixtures thereof, even more preferably selected from C$_{3-10}$ linear or branched alkanes or mixtures thereof, still more preferably selected from C$_{5-7}$ linear or branched alkanes or mixtures thereof, still even more preferably selected from hexanes or heptanes or mixtures thereof, most preferably n-hexane.

Alternatively, the organic solvent (A) used in the present invention is an alcohol solvent, preferably selected from C$_{2-12}$ saturated, unsaturated or partially saturated alcohols or mixtures thereof, more preferably selected from C$_{2-12}$ saturated straight, branched or cyclic alcohols or mixtures thereof, even more preferably selected from C$_{2-12}$ saturated straight, branched or cyclic monohydric alcohols or mixtures thereof, still more preferably selected from C$_{2-6}$ saturated straight, branched or cyclic monohydric alcohols (such as ethanol, 1-propanol, 2-propanol, butanols, pentanols (including cyclopentanol) or hexanols (including cyclohexanol)) or mixtures thereof, still even more preferably selected from propanols or mixtures thereof, most preferably 2-propanol.

Furthermore, the organic solvent (A) may be a mixture of one or more hydrocarbon solvent(s) and one or more alcohol solvent(s) indicated above.

The aerogel

The aerogel may be any inorganic aerogel. Preferably, it comprises or consists of one or more selected from silicon oxide, aluminum oxide, zirconium oxide, titanium oxide, hafnium oxide and yttrium oxide. More preferably, the aerogel comprises or consists of silicon oxide. Even more preferably the aerogel is silica aerogel.

The aerogel typically has a porosity of 85% or higher, more preferably a porosity of 90% or higher, as determined by isotherm adsorption and desorption. More specifically, porosity is determined by measuring pore volume and pore size distribution of aerogel by using the BJH (Barret-Joyner-Halenda) adsorption and desorption isotherm method.

The specific surface area of the aerogel is typically 300 m$^2$/g or higher. Preferably it is 400 m$^2$/g or higher, preferably 500 m$^2$/g or higher, preferably 600 m$^2$/g or higher, and preferably 2000 m$^2$/g or less, more preferably 1500 m$^2$/g or less, even more preferably 1000 m$^2$/g or less, still more preferably 800 m$^2$/g or less, as determined by DIN ISO 9277 2003-05 (Determination of the specific surface area of solids by gas adsorption using the BET method).

In the present invention, it is preferable that the powder of the aerogel has a median particle size (d50) in the range of 1 to 50 $\mu$m, preferably 5 to 40 $\mu$m, more preferably 10 to 30 $\mu$m, even more preferably 15 to 25 $\mu$m, as measured by laser diffraction, preferably using a Malvern Mastersizer.

The powder of the aerogel may, e.g., be obtained from a heterophase reaction. In such a case, it is preferred that the powder of the aerogel is silica aerogel powder obtained by mixing and reacting de-ionized water, water glass, an organosilane compound, an inorganic acid, and an organic solvent, which is preferably a non-polar organic solvent, to obtain silica hydrogel primary particles. The silica hydrogel primary particles are then solvent-substituted and the solvent-substituted gel particles are dried under ambient pressure to obtain silica aerogel powder. It is preferred that no further grinding or sieving treatment is performed. Such a heterophase reaction method is known to the skilled person and, e.g., described in EP 2 722 311.

The aerogel powder is preferably prepared in the form of particles instead of a monolith. Thus, preferable the aerogel powder used in the present invention has been obtained by a process which does not include grinding of the aerogel material. More preferably, the aerogel powder is in the form of primary particles (optionally including secondary particles). Accordingly, no grinding or sieving treatment is needed for generating the aerogel powder. Furthermore, it is preferred that the aerogel powder is dried under ambient pressure, e.g. 1 atm, instead of using a supercritical drying process which is sometimes employed in the production of aerogel according to the prior art.

The aerogel composition

The aerogel composition comprises the aerogel powder and the organic solvent (A). It is to be understood that the aerogel composition may contain further components. To achieve efficient distribution of the aerogel powder in the foam-containing article, the aerogel composition is preferably a dispersion of the aerogel powder in the organic solvent (A).

The aerogel composition typically contains 2 to 20 wt.-% aerogel, preferably 4 to 18 wt.-% aerogel, more preferably 6 to 18 wt.-% aerogel, even more preferably 10 to 18 wt.-% aerogel, most preferably 10 to 14 wt.-% aerogel, based on the total weight of the aerogel composition. The remainder is preferably the organic solvent (A).

It is preferred that the combined content of aerogel powder and organic solvent (A) in the aerogel composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more, based on the total weight of the aerogel composition.

Alternatively, if the method involves the use of inorganic opacifiers and/or mineral fillers, the aerogel composition is preferably a dispersion of the aerogel powder, inorganic opacifiers and/or mineral fillers in the organic solvent (A). Other components may or may not be contained in the aerogel composition. The inorganic opacifiers typically comprise or consist of one or more selected from iron oxide, zirconium oxide, titanium oxide, silicon carbide and graphite (graphite preferably being contained in the composite article in an amount of less than 5 wt.%, preferably less than 2 wt.%, more preferably less than 1 wt.% based on the total weight of the composite article). Among these, iron oxide, zirconium oxide, titanium oxide and/or silicon carbide are preferred. Preferably the inorganic opacifiers comprise or consist of one or more selected from iron oxide, zirconium oxide and silicon carbide, more preferably wherein the inorganic opacifier is iron oxide or silicon carbide.

The mineral fillers preferably comprise or consist of one or more selected from metal hydroxides and hydrated carbonates. Preferably, the mineral fillers comprise or consist of one or more selected from aluminum hydroxides, magnesium hydroxides, hydromagnesites and hydrocalcites. More preferably, the mineral fillers are one or both selected from magnesium dihydroxide and aluminum trihydroxide.

It is preferred that the inorganic opacifiers and the mineral fillers are not in the form of aerogel(s). It is in particular preferred that the bulk density of the inorganic opacifiers, and more preferably also of the mineral fillers, is at least 0.1 g/cm$^3$, tested according to DIN EN ISO 787-11 and/or that the specific surface area of the inorganic opacifiers, and more preferably also of the mineral fillers, is 300 m$^2$/g or less, tested according to DIN ISO 9277 2003-05 (BET method). Alternatively or in addition, is furthermore preferred that the inorganic opacifiers, and more preferably also the mineral fillers, are chemically different from the material used as the aerogel. It is to be understood that any combination of the inorganic opacifiers, and of the mineral fillers, mentioned herein may be used.

In the case of containing inorganic opacifiers and/or mineral fillers, the aerogel composition preferably contains 2 to 20 wt.-% aerogel, preferably 4 to 18 wt.-% aerogel, more preferably 6 to 18 wt.-% aerogel, even more preferably 10 to 18 wt.-% aerogel, most preferably 10 to 14 wt.-% aerogel, based on the total weight of the aerogel composition, the remainder preferably being organic solvent (A) and inorganic opacifiers and mineral fillers.

In the case of containing inorganic opacifiers and/or mineral fillers, the combined content of aerogel powder and organic solvent (A) in the aerogel composition is typically 50 wt.-% or more, preferably 75 wt.-% or more, more preferably 85 wt.-% or more. Furthermore, the combined content of inorganic opacifiers and mineral fillers in the aerogel composition is typically 50 wt.-% or less, preferably 25 wt.-% or less, more preferably 15 wt.-% or less, based on the total weight of the aerogel composition.

Aerogel composition further comprising melamine-formaldehyde oligomeric resin

The aerogel composition may further contain a melamine-formaldehyde resin. Such an aerogel composition further containing a melamine-formaldehyde resin is typically referred to herein as a "melamine-aerogel composition". The organic solvent used in the melamine-aerogel composition is preferably an alcohol solvent.

The melamine-aerogel composition comprises the aerogel powder, the melamine-formaldehyde resin and the organic solvent (A). The melamine-aerogel composition preferably further contains water. The water content in the melamine-aerogel composition is preferably in the range of from 1 to 30 wt.%, more preferably in the range of from 3 to 22 wt.%, even more preferably in the range of from 5 to 20 wt.%, still more preferably in the range of from 8 to 18 wt.%, still even more preferably in the range of from 11 to 17 wt.%, based on the total weight of the melamine-aerogel composition. It is to be understood that the melamine-aerogel composition may contain further components. To achieve efficient distribution of the aerogel powder and the melamine-formaldehyde resin in the fibrous article, the melamine-aerogel composition is preferably a dispersion of the aerogel powder and the melamine-formaldehyde resin in the organic solvent (A) (and optionally the water). The organic solvent of the melamine-aerogel composition is preferably an alcohol solvent as defined above.

The melamine-aerogel composition typically contains 2 to 20 wt.-% aerogel, preferably 4 to 15 wt.-% aerogel, more preferably 5 to 12 wt.-% aerogel, even more preferably 6 to 10 wt.-% aerogel, based on the total weight of the melamine-aerogel composition. The melamine-aerogel composition furthermore typically contains 0.1 to 20 wt.-% melamine-formaldehyde resin, preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the melamine-aerogel composition. The remainder is preferably the organic solvent (A).

The melamine-aerogel composition is preferably obtained by mixing a composition A comprising the aerogel and a first solvent with a composition B comprising the melamine-formaldehyde resin and a second solvent. The first solvent preferably contains at least 90 wt.-% isopropanol. The second solvent is preferably a mixture of isopropanol and water and more preferably contains 40 to 80 wt.-% isopropanol and 60 to 20 wt.-% water, preferably 50 to 80 wt.-% isopropanol and 50 to 20 wt.-% water, more preferably 60 to 70 wt.-% isopropanol and 40 to 30 wt.-% water. The weight ratio of composition A to composition B is preferably in a range of from 20:1 to 1:2, more preferably from 15:1 to 1:1, even more preferably from 10:1 to 1:1, still more preferably from 7:1 to 1:1. Accordingly, the water content in the melamine-aerogel composition is preferably in the range of from 1 to 30 wt.%, more preferably in the range of from 3 to 22 wt.%, even more preferably in the range of from 5 to 20 wt.%, still more preferably in the range of from 8 to 18 wt.%, still even more preferably in the range of from 11 to 17 wt.%, based on the total weight of the melamine-aerogel composition.

The weight ratio of the aerogel to the melamine-formaldehyde resin in the melamine-aerogel composition is preferably in a range of from 1:10 to 100:1, more preferably from 1:5 to 50:1, even more preferably from 1:2 to 20:1, still more preferably from 1:2 to 10:1, most preferably from 1:1 to 8:1 or even from 1:1 to 7:1. The same ratio applies preferably also to the composite article.

It is preferred that the combined content of aerogel powder, melamine-formaldehyde resin and organic solvent (A), and optionally water, in the melamine-aerogel composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more, based on the total weight of the melamine-aerogel composition.

Alternatively, if the method involves the use of inorganic opacifiers and/or mineral fillers, the melamine-aerogel composition is preferably a dispersion of the aerogel powder, the melamine-formaldehyde resin, inorganic opacifiers and/or mineral fillers in the organic solvent (A). Other components may or may not be contained in the melamine-aerogel composition. The inorganic opacifiers typically comprise or consist of one or more selected from iron oxide, zirconium oxide, titanium oxide, silicon carbide and graphite (graphite preferably being contained in the composite article in an amount of less than 5 wt.-%, preferably less than 2 wt.-%, more preferably less than 1 wt.-% based on the total weight of the composite article). Among these, iron oxide, zirconium oxide, titanium oxide and/or silicon carbide are preferred. Preferably the inorganic opacifiers comprise or consist of one or more selected from iron oxide, zirconium oxide and silicon carbide, more preferably wherein the inorganic opacifier is iron oxide or silicon carbide.

The mineral fillers preferably comprise or consist of one or more selected from metal hydroxides and hydrated carbonates. Preferably, the mineral fillers comprise or consist of one or more selected from aluminum hydroxides, magnesium hydroxides, hydromagnesites and hydrocalcites. More preferably, the mineral fillers are one or both selected from magnesium dihydroxide and aluminum trihydroxide.

It is preferred that the inorganic opacifiers and the mineral fillers are not in the form of aerogel(s). It is in particular preferred that the bulk density of the inorganic opacifiers, and more preferably also of the mineral fillers, is at least 0.1 g/cm$^3$, tested according to DIN EN ISO 787-11 and/or that the specific surface area of the inorganic opacifiers, and more preferably also of the mineral fillers, is 300 m$^2$/g or less, tested according to DIN ISO 9277 2003-05 (BET method). Alternatively or in addition, is furthermore preferred that the inorganic opacifiers, and more preferably also the mineral fillers, are chemically different from the material used as the aerogel. It is to be understood that any combination of the inorganic opacifiers, and of the mineral fillers, mentioned herein may be used.

In the case of containing inorganic opacifiers and/or mineral fillers, the melamine-aerogel composition preferably contains 4 to 15 wt.-% aerogel, more preferably 5 to 12 wt.-% aerogel, even more preferably 6 to 10 wt.-% aerogel, based on the total weight of the melamine-aerogel composition, and preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the melamine-aerogel composition, the remainder preferably being organic solvent (A) and inorganic opacifiers and mineral fillers.

In the case of containing inorganic opacifiers and/or mineral fillers, the combined content of aerogel powder, the melamine-formaldehyde resin and organic solvent (A) in the melamine-aerogel composition is typically 50 wt.-% or more, preferably 75 wt.-% or more, more preferably 85 wt.-% or more. Furthermore, the combined content of inorganic opacifiers and mineral fillers in the melamine-aerogel composition is typically 50 wt.-% or less, preferably 25 wt.-% or less, more preferably 15 wt.-% or less, based on the total weight of the melamine-aerogel composition.

Composite articles obtained using the melamine-formaldehyde resin composition preferably contain 15 to 70 wt.-% aerogel based on the total weight of the composite article. More preferred is 20 to 60 wt.-%, still more preferred is 30 to 50 wt.-% aerogel based on the total weight of the composite article.

Composite articles obtained using the melamine-formaldehyde resin composition preferably contain 0.1 to 20 wt.-% melamine resin based on the total weight of the composite article. More preferred is 0.5 to 15 wt.-%, even more preferred is 1 to 12 wt.-%, still more preferred is 3 to 10 wt.-% melamine resin based on the total weight of the composite article.

Optional coating comprising crosslinked melamine-formaldehyde resin

The method of the present invention may furthermore contain the additional step of coating the composite article with a coating composition comprising a melamine-formaldehyde resin. The thus obtained composite article may also be referred to as a coated composite article.

The step of coating the composite article with a coating composition comprising a melamine-formaldehyde resin is preferably performed by spraying the coating composition onto the composite article to be coated.

The coating composition contains melamine-formaldehyde resin and preferably solvent (B). Solvent (B) comprises an organic solvent and water. It is to be understood that the organic solvent in solvent (B) is preferably chosen so as to form a homogeneous mixture with the water in solvent (B). More preferably, the organic solvent in solvent (B) is an alcohol solvent, preferably selected from $C_{2-12}$ saturated, unsaturated or partially saturated alcohols or mixtures thereof, more preferably selected from $C_{2-12}$ straight, branched or cyclic alcohols or mixtures thereof, even more preferably selected from $C_{2-12}$ saturated straight, branched or cyclic monohydric alcohols or mixtures thereof, still more preferably selected from $C_{2-6}$ saturated straight, branched or cyclic monohydric alcohols (such as ethanol, 1-propanol, 2-propanol, butanols, pentanols (including cyclopentanol) or hexanols (including cyclohexanol)) or mixtures thereof, still even more preferably selected from propanols or mixtures thereof, most preferably 2-propanol. It is to be understood that the organic solvent may be a mixture of one or more such alcohol solvents.

The solvent (B) is preferably a mixture of isopropanol and water and more preferably contains 40 to 80 wt.-% isopropanol and 60 to 20 wt.-% water, preferably 50 to 80 wt.-% isopropanol and 50 to 20 wt.-% water, more preferably 60 to 70 wt.-% isopropanol and 40 to 30 wt.-% water.

The coating composition preferably contains 0.1 to 30 wt.-% melamine-formaldehyde resin, preferably 1 to 25 wt.-% melamine-formaldehyde resin, more preferably 3 to 22 wt.-% aerogel melamine-formaldehyde resin, even more preferably 5 to 20 wt.-% melamine-formaldehyde resin, still more preferably 10 to 20 wt.-% melamine-formaldehyde resin, even still more preferably 12 to 18 wt.-% melamine-formaldehyde resin, based on the total weight of the coating composition.

It is preferred that the combined content of melamine-formaldehyde resin and solvent (B) in the coating composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more, based on the total weight of the coating composition.

Optionally, the coating composition may comprise inorganic opacifiers and/or mineral fillers such as set out above for the aerogel composition.

The step of coating the composite article with a coating composition comprising a melamine-formaldehyde resin may be followed by a step of partially or completely removing the solvent (B) which includes drying/curing at a temperature of 120 to 180°C for 1 to 8 hours.

The coated composite article preferably contains 0.1 to 20 wt.-% melamine resin based on the total weight of the coated composite article. More preferred is 0.5 to 18 wt.-%, even more preferred is 1 to 15 wt.-% melamine resin based on the total weight of the coated composite article.

The thickness of the coated composite article is preferably in the range of 0.1 mm to 500 mm. Generally, it is preferred that the coated composite article has a thickness of 1 to 30 mm.

The weight of the coating of the coated composite article is preferably in the range of from 1 g/m$^2$ to 2000 g/m$^2$, more preferably in the range of from 2 g/m$^2$ to 1000 g/m$^2$, even more preferably in the range of from 5 g/m$^2$ to 500 g/m$^2$, still more preferably in the range of from 10 g/m$^2$ to 300 g/m$^2$. As the skilled person will understand, the coating weight can easily be determined by varying the concentration of the coating composition (in particular the amount of components other than solvent in the coating composition) and/or the amount of the applied coating composition.

The composite article obtainable by the method

The present invention furthermore relates to a composite article obtainable by the method according to the present invention. It is to be understood that this composite article exhibits the properties resulting from the method of the present invention. Accordingly, any of the features set out herein with respect to the method of the invention, including any preferred ranges, also apply with respect to the composite article of the present invention.

For example, the composite article preferably contains 50 to 98 wt.-% aerogel based on the total weight of the composite article. The thickness of the composite article is preferably in the range of 3 mm to 500 mm.

It is to be understood that any known fillers may be contained in the composite article of the present invention without any particular limitation.

The composite article may be defined in further ways, either by referring to its method of production or to its properties.

Accordingly, the composite article of the present invention may be defined as comprising aerogel particles and a foam, wherein the composite article is obtainable by impregnating an aerogel composition comprising an aerogel powder and an organic solvent (A), and optionally inorganic opacifiers and/or mineral fillers, into a foam-containing article comprising a foam, and partially or completely removing the organic solvent (A) to obtain the composite article. The composite article may also be obtainable by injecting, or impregnating or soaking an aerogel composition comprising an aerogel powder, a melamine-formaldehyde resin and an organic solvent (A), and optionally inorganic opacifiers and/or mineral fillers, into a foam-containing article comprising a foam, and partially or completely removing the organic solvent (A) to obtain the composite article. Furthermore, the composite article may comprise a coating containing a melamine resin. The weight of the coating of the composite article is preferably in the range of from 1 g/m$^2$ to 2000 g/m$^2$, more preferably in the range of from 2 g/m$^2$ to 1000 g/m$^2$, even more preferably in the range of from 5 g/m$^2$ to 500 g/m$^2$, still more preferably in the range of from 10 g/m$^2$ to 300 g/m$^2$. As the skilled person will understand, the coating weight can easily be determined by varying the concentration of the coating composition (in particular the amount of components other than solvent in the coating composition) and/or the amount of the applied coating composition.

The composite article preferably contains 0.1 to 20 wt.-% melamine resin based on the total weight of the composite article. More preferred is 0.5 to 18 wt.-%, even more preferred is 1 to 15 wt.-% melamine resin based on the total weight of the composite article.

In addition or alternatively, the composite article may be defined as comprising aerogel particles and a foam, wherein one or more of the following requirements (i) to (v) are fulfilled:

(i) the weight ratio of the one or more aerogels to the one or more foams (aerogel/foam) in the composite article is 1:8 or higher;

(ii) the composite article has a thermal conductivity at 0°C of not higher than 0.030 W/m·K. Preferably, the thermal conductivity at 0°C is not higher than 0.028 W/m·K, more preferably not higher than 0.026 W/m·K, even more preferably not higher than 0.024 W/m·K, still more preferably not higher than 0.022 W/m·K;

(iii) the composite article has a thermal conductivity at 20°C of not higher than 0.032 W/m·K. Preferably, the thermal conductivity at 20°C is not higher than 0.030 W/m·K, more preferably not higher than 0.028 W/m·K, even more preferably not higher than 0.026 W/m·K, still more preferably not higher than 0.024 W/m·K;

(iv) the composite article has a thermal conductivity at 40°C of not higher than 0.034 W/m·K. Preferably, the thermal conductivity at 40°C is not higher than 0.032 W/m·K, more preferably not higher than 0.030 W/m·K, even more preferably not higher than 0.028 W/m·K, still more preferably not higher than 0.026 W/m·K.

(v) the composite article has a burn-through time of 10 minutes or more, wherein the burn-through resistance is determined using the composite article in the form of a 16 cm x 16 cm sheet with a thickness of 8 mm and treating the composite article at the centre of its first major surface by using a propane gas burner (flame source defined in DIN EN ISO 11925-2, Ignitability of products subjected to direct impingement of flame - Part 2: Single-flame source test), wherein the burn-through time is the duration from start of the flame treatment until the flame reaches centre of the second major surface.

The composite article may fulfil one or any number of possible combinations of requirements (i) to (v). For example, the composite article preferably fulfils requirement (i), or requirement (ii), or requirement (iii), or requirement (iv), or requirement (v). Alternatively, it is preferred that two requirements be fulfilled, such as (i) and (ii), (ii) and (iii), (iii) and (iv), (iv) and (v), (i) and (iii), (ii) and (iv), (iii) and (v), (i) and (iv), (ii) and (v), or (i) and (v). Alternatively, it is preferred that three requirements be fulfilled, such as (i) and (ii) and (iii), (i) and (ii) and (iv), (i) and (ii) and (v), (i) and (iii) and (iv), (i) and (iii) and (v), (i) and (iv) and (v), (ii) and (iii) and (iv), (ii) and (iii) and (v), (ii) and (iv) and (v), or (iii) and (iv) and (v). Alternatively, it is preferred that four or all of these requirements be fulfilled.

The composite article may furthermore comprise a melamine resin. Preferably at least part of the melamine resin is present in the form of a coating. The weight of the coating of the composite article is preferably in the range of

from 1 g/m$^2$ to 2000 g/m$^2$, more preferably in the range of from 2 g/m$^2$ to 1000 g/m$^2$, even more preferably in the range of from 5 g/m$^2$ to 500 g/m$^2$, still more preferably in the range of from 10 g/m$^2$ to 300 g/m$^2$. As the skilled person will understand, the coating weight can easily be determined by varying the concentration of the coating composition (in particular the amount of components other than solvent in the coating composition) and/or the amount of the applied coating composition.

The composite article preferably contains 0.1 to 20 wt.-% melamine resin based on the total weight of the composite article. More preferred is 0.5 to 18 wt.-%, even more preferred is 1 to 15 wt.-% melamine resin based on the total weight of the composite article.

It is to be understood that also the composite article according to these alternative definitions may further comprise inorganic opacifiers and/or mineral fillers. The composite article preferably contains 50 to 98 wt.-%, more preferably 60 to 96 wt%, still more preferably 70 to 95 wt%, or even 75 to 95 wt.%, 80 to 95 wt.% or 85 to 95 wt.%, such as 88 to 92 wt.% aerogel, based on the total weight of the composite article. Preferably, the composite article has a thickness in the range of 3 mm to 500 mm, more preferably in the range of 3 to 100 mm, still more preferably in the range of 3 to 50 mm, still even more preferably in the range of 5 to 30 mm. In addition, when the width of the composite article is W, the length of the composite article is L and the thickness of the composite article is T, the following requirement is preferably fulfilled:

$$R = \frac{W \times L}{T^2}$$

wherein R is 100 or more, preferably 1000 or more, more preferably 10000 or more,
wherein W/L is preferably in a range of 1000/1 to 1/1000,
wherein W/T is preferably 10 or more, and
wherein L/T is preferably 10 or more.

It is to be understood that the composite article of the present invention may contain further components, such as inert fillers or pigments, flame retardants, flame and smoke suppressors, binders. These are preferably added by including them in the aerogel composition.

The composite article of the present invention may furthermore be coated with various other materials and/or combined with other materials, such as wovens or laminates, to form further composites.

The present invention may be summarized by the following items:

1. A method for the preparation of a composite article comprising aerogel particles and a foam, the method comprising:

   providing a foam-containing article comprising a foam,
   providing an aerogel composition comprising an aerogel powder and an organic solvent (A),
   combining the foam-containing article and the aerogel composition, and
   partially or completely removing the organic solvent (A) to obtain the composite article.

2. The method for the preparation of a composite article according to item 1, wherein the composite article further comprises inorganic opacifiers and/or mineral fillers, wherein the step of providing an aerogel composition comprising an aerogel powder and an organic solvent (A), is a step of providing an aerogel composition comprising an aerogel powder and an organic solvent (A) and inorganic opacifiers and/or mineral fillers.

3. The method for the preparation of a composite article according to item 1 or 2, wherein the foam-containing article is a foam sheet.

4. The method for the preparation of a composite article according to any one of items 1 to 3, wherein the foam-containing article has a density of 2 to 300 kg/m$^3$, preferably 5 to 200 kg/m$^3$, more preferably 6 to 150 kg/m$^3$.

5. The method for the preparation of a composite article according to any one of the preceding items, wherein the proportion of open cells of the foam is 50% or more, preferably 60 to 99 %, in particular 85 to 95 % or 90 to 99 %, wherein the proportion of open cells of the foam is preferably determined according to ASTM D2856 of 40 to 99%.

6. The method for the preparation of a composite article according to any one of the preceding items, wherein the foam comprises one or more selected from polyurethane foam, polyisocyanurate foam, melamine foam, phenolic foam, chemically crosslinked polyolefin foam, polypropylene foam and mixtures thereof.

7. The method for the preparation of a composite article according to any one of the preceding items, wherein the foam comprises one or more selected from polyurethane (PUR) foams, melamine foams, and phenolic foams.

8. The method for the preparation of a composite article according to any one of the preceding items, wherein the foam comprises melamine foam.

9. The method for the preparation of a composite article according to any one of the preceding items, wherein the foam is chemically and/or physically crosslinked.

10. The method for the preparation of a composite article according to any one of the preceding items, wherein the organic solvent (A) is a hydrocarbon solvent, preferably selected from $C_{3-16}$ saturated, unsaturated or partially saturated hydrocarbons or mixtures thereof, more preferably selected from $C_{3-10}$ saturated straight, branched or cyclic hydrocarbons or mixtures thereof, even more preferably selected from $C_{3-10}$ linear or branched alkanes or mixtures thereof, still more preferably selected from $C_{5-7}$ linear or branched alkanes or mixtures thereof, still even more preferably selected from hexanes or heptanes or mixtures thereof, most preferably n-hexane.

11. The method for the preparation of a composite article according to any one of items 1 to 9, wherein the organic solvent (A) is an alcohol solvent, preferably selected from $C_{2-12}$ saturated, unsaturated or partially saturated alcohols or mixtures thereof, more preferably selected from $C_{2-12}$ saturated straight, branched or cyclic alcohols or mixtures thereof, even more preferably selected from $C_{2-12}$ saturated straight, branched or cyclic monohydric alcohols or mixtures thereof, still more preferably selected from $C_{2-6}$ saturated straight, branched or cyclic monohydric alcohols or mixtures thereof, still even more preferably selected from propanols or mixtures thereof, most preferably 2-propanol.

12. The method for the preparation of a composite article according to any one of the preceding items, wherein the aerogel comprises or consists of one or more selected from silicon oxide, aluminum oxide, zirconium oxide, titanium oxide, hafnium oxide and yttrium oxide, preferably wherein the aerogel comprises or consists of silicon oxide, more preferably wherein the aerogel is silica aerogel.

13. The method for the preparation of a composite article according to any one of the preceding items, wherein the aerogel has a porosity of 85% or higher, more preferably a porosity of 90% or higher, as determined by isotherm adsorption and desorption.

14. The method for the preparation of a composite article according to any one of the preceding items, wherein the aerogel has a specific surface area of 300 m$^2$/g or higher, preferably 400 m$^2$/g or higher, preferably 500 m$^2$/g or higher, preferably 600 m$^2$/g or higher, and preferably 2000 m$^2$/g or less, more preferably 1500 m$^2$/g or less, even more preferably 1000 m$^2$/g or less, as determined by DIN ISO 9277 2003-05 (Determination of the specific surface area of solids by gas adsorption using the BET method).

15. The method for the preparation of a composite article according to any one of the preceding items, wherein the powder of the aerogel has a median particle size (d50) in the range of 1 to 50 $\mu$m, preferably 5 to 40 $\mu$m, more preferably 10 to 30 $\mu$m, even more preferably 15 to 25 $\mu$m, as measured by laser diffraction, preferably using a Malvern Mastersizer.

16. The method for the preparation of a composite article according to any one of the preceding items, wherein the powder of the aerogel is obtained from a heterophase reaction.

17. The method for the preparation of a composite article according to any one of the preceding items, wherein the powder of the aerogel is silica aerogel powder obtained by mixing and reacting de-ionized water, water glass, an organosilane compound, an inorganic acid, and an organic solvent, which is preferably a non-polar organic solvent, to obtain silica hydrogel primary particles, solvent-substituting the silica hydrogel primary particles, and drying the solvent-substitution completed gel particles under ambient pressure to obtain silica aerogel powder, preferably without any further grinding or sieving treatment.

18. The method for the preparation of a composite article according to item 1 or any one of items 3 to 17, wherein the aerogel composition is a dispersion of the aerogel powder in the organic solvent (A).

19. The method for the preparation of a composite article according to item 1 and any one of items 3 to 18, wherein the aerogel composition contains 2 to 20 wt.-% aerogel, preferably 4 to 18 wt.-% aerogel, more preferably 6 to 18 wt.-% aerogel, even more preferably 10 to 18 wt.-% aerogel, based on the total weight of the aerogel composition, the remainder preferably being organic solvent (A).

20. The method for the preparation of a composite article according to item 1 and any of items 3 to 19, wherein the combined content of aerogel powder and organic solvent (A) in the aerogel composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more.

21. The method for the preparation of a composite article according to any one of items 2 to 17, wherein the aerogel composition is a dispersion of the aerogel powder, inorganic opacifiers and/or mineral fillers in the organic solvent (A).

22. The method for the preparation of a composite article according to any one of items 2 to 17 and 21, wherein the inorganic opacifiers comprise or consist of one or more selected from iron oxide, zirconium oxide, titanium oxide, silicon carbide and graphite, preferably wherein the inorganic opacifiers comprise or consist of one or more selected from iron oxide, zirconium oxide, and silicon carbide, more preferably wherein the inorganic opacifier is iron oxide or silicon carbide.

23. The method for the preparation of a composite article according to any one of items 2 to 17, 21 and 22, wherein the mineral fillers comprise or consist of one or more selected from metal hydroxides and hydrated carbonates, preferably wherein the mineral fillers comprise or consist of one or more selected from aluminum hydroxides, magnesium hydroxides, hydromagnesites and hydrocalcites, more preferably wherein the mineral fillers are one or both selected from magnesium dihydroxide and aluminum trihydroxide.

24. The method for the preparation of a composite article according to any one of items 2 to 17 and 21 to 23, wherein the aerogel composition contains 2 to 20 wt.-% aerogel, preferably 4 to 18 wt.-% aerogel, more preferably 6 to 18 wt.-% aerogel, even more preferably 10 to 18 wt.-% aerogel, based on the total weight of the aerogel composition, the remainder preferably being organic solvent (A) and inorganic opacifiers and mineral fillers.

25. The method for the preparation of a composite article according to any one of items 2 to 17 and 21 to 24, wherein the combined content of aerogel powder and organic solvent (A) in the aerogel composition is 50 wt.-% or more, preferably 75 wt.-% or more, more preferably 85 wt.-% or more.

26. The method for the preparation of a composite article according to any one of items 2 to 17 and 21 to 25, wherein the combined content of inorganic opacifiers and mineral fillers in the aerogel composition is 50 wt.-% or less, preferably 25 wt.-% or less, more preferably 15 wt.-% or less.

27. The method for the preparation of a composite article according to any one of the preceding items, wherein the aerogel composition comprises an aerogel powder, a melamine-formaldehyde resin and an organic solvent.

28. The method for the preparation of a composite article according to item 27, wherein the aerogel composition is a dispersion of the aerogel powder and the melamine-formaldehyde resin in the organic solvent.

29. The method for the preparation of a composite article according to item 27 or 28, wherein the aerogel composition contains 2 to 20 wt.-% aerogel, preferably 4 to 15 wt.-% aerogel, more preferably 5 to 12 wt.-% aerogel, even more preferably 6 to 10 wt.-% aerogel, based on the total weight of the aerogel composition, and 0.1 to 20 wt.-% melamine-formaldehyde resin, preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the aerogel composition, the remainder preferably being organic solvent.

30. The method for the preparation of a composite article according to any of items 27 to 29, wherein the combined content of aerogel powder, melamine-formaldehyde resin and organic solvent in the aerogel composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more.

31. The method for the preparation of a composite article according to any of items 27 to 30, wherein the aerogel composition is a dispersion of the aerogel powder, a melamine-formaldehyde resin, inorganic opacifiers and/or mineral fillers in the organic solvent.

32. The method for the preparation of a composite article according to any of items 27 to 31, wherein the inorganic opacifiers comprise or consist of one or more selected from iron oxide, zirconium oxide, titanium oxide, silicon carbide and graphite, preferably wherein the inorganic opacifiers comprise or consist of one or more selected from iron oxide, zirconium oxide, and silicon carbide, more preferably wherein the inorganic opacifier is iron oxide or silicon carbide.

33. The method for the preparation of a composite article according to any of items 27 to 32, wherein the mineral fillers comprise or consist of one or more selected from metal hydroxides and hydrated carbonates, preferably wherein the mineral fillers comprise or consist of one or more selected from aluminum hydroxides, magnesium hydroxides, hydromagnesites and hydrocalcites, more preferably wherein the mineral fillers are one or both selected from magnesium dihydroxide and aluminum trihydroxide.

34. The method for the preparation of a composite article according to any of items 27 to 33, wherein the aerogel composition contains 2 to 20 wt.-% aerogel, preferably 4 to 15 wt.-% aerogel, more preferably 5 to 12 wt.-% aerogel, even more preferably 6 to 10 wt.-% aerogel, based on the total weight of the aerogel composition, and 0.1 to 20 wt.-% melamine-formaldehyde resin, preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the aerogel composition, the remainder preferably being organic solvent and inorganic opacifiers and mineral fillers.

35. The method for the preparation of a composite article according to any of items 27 to 34, wherein the combined content of aerogel powder, the melamine-formaldehyde resin and organic solvent in the aerogel composition is 50 wt.-% or more, preferably 75 wt.-% or more, more preferably 85 wt.-% or more.

36. The method for the preparation of a composite article according to any of items 27 to 35, wherein the combined content of inorganic opacifiers and mineral fillers in the aerogel composition is 50 wt.-% or less, preferably 25 wt.-% or less, more preferably 15 wt.-% or less.

37. The method for the preparation of a composite article according to any one of the preceding items, wherein the foam-containing article and the aerogel composition are combined by impregnating the aerogel composition into the foam-containing article.

38. The method for the preparation of a composite article according to any one of the preceding items wherein partially or completely removing the organic solvent (A) to obtain the composite article by drying includes drying at a temperature of 50 to 150°C for 1 to 8 hours, preferably by drying at 100°C to 120°C for 1 to 48 hours.

39. The method for the preparation of a composite article according to any one of the preceding items, wherein the composite article contains 50 to 98 wt.-%, preferably 60 to 96 wt%, more preferably 70 to 95 wt%, aerogel, based on the total weight of the composite article.

40. The method for the preparation of a composite article according to any one of the preceding items, further comprising a step of coating the composite article with a coating composition comprising a melamine-formaldehyde resin.

41. The method for the preparation of a composite article according to the preceding item, wherein the step of coating the composite article with a coating composition comprising a melamine-formaldehyde resin is performed by spraying the coating composition onto the composite article to be coated.

42. The method for the preparation of a composite article according to item 40 or 41, wherein the coating composition contains melamine-formaldehyde resin and solvent (B), where solvent (B) preferably comprises an organic solvent and water.

43. The method for the preparation of a composite article according to the preceding item, wherein the organic solvent in solvent (B) is an alcohol solvent (containing one or more alcohols), preferably selected from $C_{2-12}$ saturated, unsaturated or partially saturated alcohols or mixtures thereof, more preferably selected from $C_{2-12}$ saturated straight, branched or cyclic alcohols or mixtures thereof, even more preferably selected from $C_{2-12}$ saturated straight, branched

or cyclic monohydric alcohols or mixtures thereof, still more preferably selected from $C_{2-6}$ saturated straight, branched or cyclic monohydric alcohols (such as ethanol, 1-propanol, 2-propanol, butanols, pentanols (including cyclopentanol) or hexanols (including cyclohexanol)) or mixtures thereof, still even more preferably selected from propanols or mixtures thereof, most preferably 2-propanol.

44. The method for the preparation of a composite article according to item 42, wherein the solvent (B) is a mixture of isopropanol and water and preferably contains 40 to 80 wt.-% isopropanol and 60 to 20 wt.-% water, preferably 50 to 80 wt.-% isopropanol and 50 to 20 wt.-% water, more preferably 60 to 70 wt.-% isopropanol and 40 to 30 wt.-% water.

45. The method for the preparation of a composite article according to any one of items 40 to 44, wherein the coating composition preferably contains 0.1 to 30 wt.-% melamine-formaldehyde resin, preferably 1 to 25 wt.-% melamine-formaldehyde resin, more preferably 3 to 22 wt.-% aerogel melamine-formaldehyde resin, even more preferably 5 to 20 wt.-% melamine-formaldehyde resin, still more preferably 10 to 20 wt.-% melamine-formaldehyde resin, even still more preferably 12 to 18 wt.-% melamine-formaldehyde resin, based on the total weight of the coating composition.

46. The method for the preparation of a composite article according to any one of items 40 to 45, wherein the combined content of melamine-formaldehyde resin and solvent (B) in the coating composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more, based on the total weight of the coating composition.

47. The method for the preparation of a composite article according to any one of items 40 to 46, wherein the step of coating the composite article with a coating composition comprising a melamine-formaldehyde resin is followed by a step of heating to a temperature of at least 100°C for at least 10 minutes (preferably 1 hour), preferably to a temperature of 120 to 180°C for 1 to 8 hours.

48. The method for the preparation of a composite article according to any one of items 40 to 47, wherein the composite article contains 15 to 70 wt.-%, preferably 20 to 60 wt.-%, more preferably 30 to 50 wt.-%, aerogel, based on the total weight of the composite article and contains 0.1 to 20 wt.-%, preferably 0.5 to 18 wt.-%, even more preferably 1 to 15 wt.-% melamine resin based on the total weight of the composite article.

49. The method for the preparation of a composite article according to any one of the preceding items, wherein the composite article has a thickness in the range of 3 mm to 500 mm, preferably in the range of 3 to 100 mm, more preferably in the range of 3 to 50 mm, even more preferably in the range of 5 to 30 mm.

50. The method for the preparation of a composite article according to any one of the preceding items, wherein when the width of the composite article is W, the length of the composite article is L and the thickness of the composite article is T, the following requirement is fulfilled:

$$R = \frac{W \times L}{T^2}$$

wherein R is 100 or more, preferably 1000 or more, more preferably 10000 or more,
wherein W/L is preferably in a range of 1000/1 to 1/1000,
wherein W/T is preferably 10 or more, and
wherein L/T is preferably 10 or more.

51. The method for the preparation of a composite article according to any one of the preceding items, wherein the composite article contains less than 15% by weight organic compounds other than melamine resin and the materials of the foam, preferably less than 10% by weight organic compounds other than melamine resin and the materials of the foam, more preferably less than 5% by weight organic compounds other than melamine resin and the materials of the foam, wherein the term organic compound relates to any compounds containing at least one carbon-hydrogen bond.

52. The method for the preparation of a composite article according to any one of the preceding items, wherein the composite article contains less than 10% by weight binder, preferably less than 5% by weight binder, more preferably less than 2% by weight binder, even more preferably less than 1% by weight binder, still more preferably less than 0.5% by weight binder, most preferably less than 0.1% by weight binder.

53. A composite article obtainable by the method according to any one of the preceding items.

54. A composite article comprising aerogel particles and a foam, wherein the composite article is obtainable by injecting, or impregnating or soaking an aerogel composition comprising an aerogel powder and an organic solvent (A), and optionally inorganic opacifiers and/or mineral fillers, into a foam-containing article comprising a foam, and partially or completely removing the organic solvent (A) to obtain the composite article.

55. The composite article according to item 54, wherein the composite article is obtainable by injecting, or impregnating or soaking an aerogel composition comprising an aerogel powder, a melamine-formaldehyde resin and an organic solvent (A), and optionally inorganic opacifiers and/or mineral fillers, into a foam-containing article comprising a foam, and partially or completely removing the organic solvent (A) to obtain the composite article.

56. The composite article according to item 54 or 55, wherein the composite article furthermore comprises a coating containing a melamine resin.

57. A composite article comprising aerogel particles and a foam, wherein one or more of the following requirements (i) to (v) are fulfilled:

(i) the weight ratio of the one or more aerogels to the one or more foams (aerogel/foam) in the composite article is 1:8 or higher;
(ii) the composite article has a thermal conductivity at 0°C of not higher than 0.030 W/m·K. Preferably, the thermal conductivity at 0°C is not higher than 0.028 W/m·K, more preferably not higher than 0.026 W/m·K, even more preferably not higher than 0.024 W/m·K, still more preferably not higher than 0.022 W/m·K;
(iii) the composite article has a thermal conductivity at 20°C of not higher than 0.032 W/m·K. Preferably, the thermal conductivity at 20°C is not higher than 0.030 W/m·K, more preferably not higher than 0.028 W/m·K, even more preferably not higher than 0.026 W/m·K, still more preferably not higher than 0.024 W/m·K;
(iv) the composite article has a thermal conductivity at 40°C of not higher than 0.034 W/m·K. Preferably, the thermal conductivity at 40°C is not higher than 0.032 W/m·K, more preferably not higher than 0.030 W/m·K, even more preferably not higher than 0.028 W/m·K, still more preferably not higher than 0.026 W/m·K.
(v) the composite article has a burn-through time of 10 minutes or more, wherein the burn-through resistance is determined using the composite article in the form of a 16 cm x 16 cm sheet with a thickness of 8 mm and treating the composite article at the centre of its first major surface by using a propane gas burner (flame source defined in DIN EN ISO 11925-2, Ignitability of products subjected to direct impingement of flame - Part 2: Single-flame source test), wherein the burn-through time is the duration from start of the flame treatment until the flame reaches centre of the second major surface.

58. The composite article according to item 57, further comprising inorganic opacifiers and/or mineral fillers.

59. The composite article according to item 58, wherein the composite article furthermore comprises a melamine resin.

60. The composite article according to item 59, wherein at least part of the melamine resin is present in the form of a coating.

61. The composite article according to any one of items 57 to 60, wherein the composite article contains less than 15% by weight organic compounds other than melamine resin and the materials of the foam, preferably less than 10% by weight organic compounds other than melamine resin and the materials of the foam, more preferably less than 5% by weight organic compounds other than melamine resin and the materials of the foam, wherein the term organic compound relates to any compounds containing at least one carbon-hydrogen bond.

62. The composite article according to any one of items 57 to 61, wherein the composite article contains less than 10% by weight binder, preferably less than 5% by weight binder, more preferably less than 2% by weight binder, even more preferably less than 1% by weight binder, still more preferably less than 0.5% by weight binder, most preferably less than 0.1% by weight binder.

63. The composite article according to any one of items 57 to 62, wherein the composite article contains 50 to 98 wt.-%, preferably 60 to 96 wt%, more preferably 70 to 95 wt% aerogel based on the total weight of the composite article.

64. The composite article according to any one of items 57 to 63, wherein the composite article has a thickness in the range of 3 mm to 500 mm, preferably in the range of 3 to 100 mm, more preferably in the range of 3 to 50 mm, even more preferably in the range of 5 to 30 mm.

65. The composite article according to any one of items 57 to 64, wherein, when the width of the composite article is W, the length of the composite article is L and the thickness of the composite article is T, the following requirement is fulfilled:

$$R = \frac{W \times L}{T^2}$$

wherein R is 100 or more, preferably 1000 or more, more preferably 10000 or more,

wherein W/L is preferably in a range of 1000/1 to 1/1000,

wherein W/T is preferably 10 or more, and

wherein L/T is preferably 10 or more.

**EXAMPLES**

**Example 1**

Materials

Aerogel powder (JIOS AeroVa Aerogel Powder, D20 Grade)
Melamine open-cell foams (Basotect B, BASF) in thicknesses of 8, 14 and 25 mm with a density of 9 kg/m$^3$
n-Hexane (technical grade)
2-Propanol (technical grade)

Experimental

The aerogel was dispersed using a standard lab mixing equipment, more specifically a propeller mixer (Heidolph overhead stirrer RZR2020) in 2-propanol or n-hexane to reach a solid content of 10 - 14 wt-%.
Melamine, open-cell foams (Basotect B, BASF) in thicknesses of 8, 14 and 25mm were treated by pouring the aerogel dispersion as described above over the substrate to saturation. After subsequent drying to remove the carrier solvent aerogel filled foams with aerogel contents of even more than 90% by weight were obtained:

| Examples | 1 | 2 | 3 | 4 | 5 |
|---|---|---|---|---|---|
| Aerogel dispersion | 11 wt-% dispersion | | 13 wt-% dispersion | 11 wt-% dispersion | |
| Solvent | iPrOH | n-Hexane | iPrOH | n-Hexane | n-Hexane |
| Foam matrix | BasoTect B | BasoTect B | BasoTect B | BasoTect B | BasoTect B |
| Raw Thickness [mm] | 8.50 | 8.60 | 8.60 | 13.60 | 23.90 |
| Size [cm] | 16x16 | 16x16 | 16x16 | 16x16 | 16x16 |
| Raw weight [g] | 2.00 | 1.88 | 1.85 | 2.91 | 5.10 |

(continued)

| Examples | 1 | 2 | 3 | 4 | 5 |
|---|---|---|---|---|---|
| Dried thickness [mm] | 8.50 | 8.50 | 8.60 | 13.50 | 23.70 |
| Dried weight [g] | 8.46 | 19.08 | 21.37 | 29.4 | 49.92 |
| Aerogel content [wt-%] | 76.4% | 90.1% | 91.4% | 90.1% | 89.8% |

| Comparative Examples | 1 |
|---|---|
| | Plain foam |
| Aerogel dispersion | -- |
| Solvent | -- |
| Foam matrix | BasoTect B |
| Raw Thickness [mm] | 8.60 |
| Size [cm] | 16x16 |
| Raw weight [g] | 1.88 |
| Dried thickness [mm] | 8.60 |
| Dried weight [g] | 1.88 |
| Aerogel content [wt-%] | 0.0% |

Results and evaluation

Main characteristics of these filled foams included low thermal conductivity and low dust emissions. Furthermore, the flexibility of the filled foams was surprisingly high, almost as high as of the unfilled foams. The filled foams were also easy to cut and handle and had a very low density of only about 100 kg/m$^3$.

The foams were self-extinguishing on direct contact with flame and improved flammability behavior over the unfilled foam.

Characterization results and photographs of these prototypes are shown in the enclosed figures as follows:

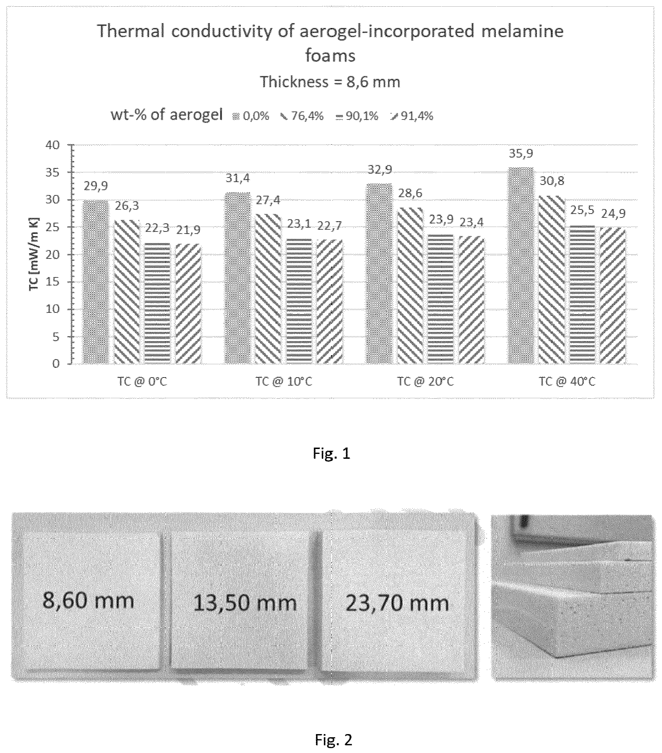

Fig. 1:         Thermal conductivity values of Comparative Example 1 and Examples 1 to 3
Fig. 2:         Photographs of Examples 2, 4 and 5

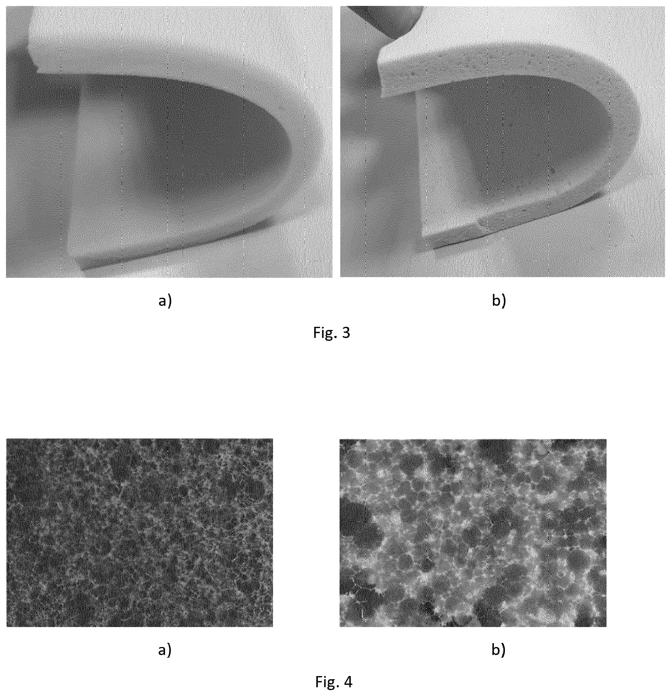

Fig. 3:         The filled foams show a surprisingly high degree of flexibility (fig. 3b) with almost no difference to the unfilled (fig. 3a) foam as a reference (Example 4). No significant dust emissions are observable when bending the filled foam samples:
Fig. 4:         Micrographs of Example 2 show the high degree of filling and the aerogel agglomeration behavior (fig. 4b) vs. the unfilled reference (fig. 4a):

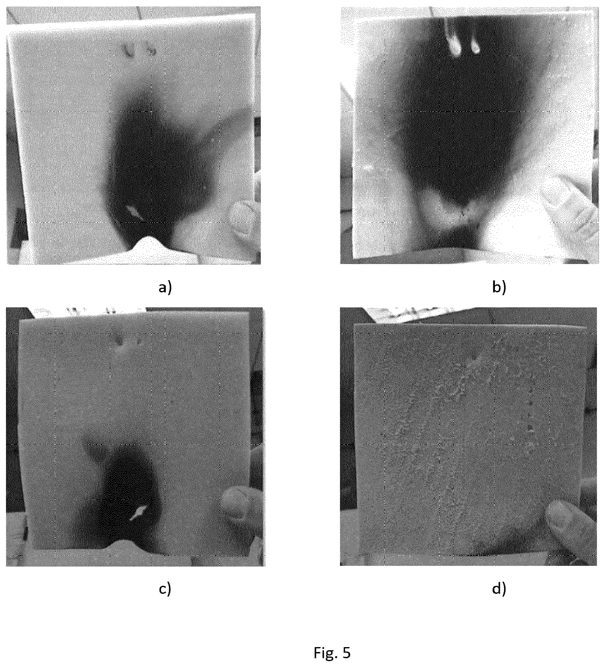

Fig. 5:         Photographs of Example 2 taken after exposure to direct flame. Flame penetration is significantly hindered in the filled foam, no burn-through occurs even after 10 min. of direct exposure:
Fig. 5a and 5c:  unfilled foam (Comparative Example 1): with burn through after exposure to direct flame, (5a: flamed side; 5c: non-exposed side).
Fig. 5b and 5d:  filled foam (Example 2): no burn through even after 10 min, (5b: flamed side; 5d: non-exposed side).

2 Analysis and tests conducted

2.1 Microscopic imaging

The specimens were observed under an Olympus Stereomicroscope SZX7 equipped with an Olympus DF Plapo 1x-4 objective, for their surface morphology.

2.2 Fire resistance test

In order to study the fire resistance performance, the specimens were exposed to direct fire impingement. The specimens were cut into a dimension of 16x16 cm and were exposed to the burner of the Euroclass E fire test (DIN EN ISO 11925-2), which is using commercially available propane gas of at least 95% purity under a gas pressure between 10 kPa and 50 kPa.

2.3 Thermal conductivity

Thermal conductivity was measured according to the standard DIN EN 12667 by using the heat flow meter method with a LaserComp Fox 200 device. The specimens were cut into a dimension of 20x20 cm and their thermal conductivity at 0, 10, 20 and 40°C were recorded as results.

**Claims**

1.  A method for the preparation of a composite article comprising aerogel particles and a foam, the method comprising:

    providing a foam-containing article comprising a foam,
    providing an aerogel composition comprising an aerogel powder and an organic solvent (A),
    combining the foam-containing article and the aerogel composition, and
    partially or completely removing the organic solvent (A) to obtain the composite article.

2.  The method for the preparation of a composite article according to claim 1, wherein the foam-containing article has a density of 2 to 300 kg/m$^3$, preferably 5 to 200 kg/m$^3$, more preferably 6 to 150 kg/m$^3$.

3.  The method for the preparation of a composite article according to claim 1 or 2, wherein the proportion of open cells of the foam is 50% or more, preferably 60 to 99 %, in particular 85 to 95 % or 90 to 99 %.

4.  The method for the preparation of a composite article according to any one of the preceding claims, wherein the foam comprises one or more selected from polyurethane foam, polyisocyanurate foam, melamine foam, phenolic foam, chemically crosslinked polyolefin foam, polypropylene foam and mixtures thereof.

5.  The method for the preparation of a composite article according to any one of the preceding claims, wherein the foam comprises melamine foam.

6.  The method for the preparation of a composite article according to any one of the preceding claims, wherein the aerogel composition contains 2 to 20 wt.-% aerogel, preferably 4 to 18 wt.-% aerogel, more preferably 6 to 18 wt.-% aerogel, even more preferably 10 to 18 wt.-% aerogel, based on the total weight of the aerogel composition, the remainder preferably being organic solvent (A).

7.  The method for the preparation of a composite article according to any one of the preceding claims, wherein the aerogel composition comprises an aerogel powder, a melamine-formaldehyde resin and an organic solvent.

8.  The method for the preparation of a composite article according to any one of the preceding claims, wherein the foam-containing article and the aerogel composition are combined by impregnating the aerogel composition into the foam-containing article.

9.  The method for the preparation of a composite article according to any one of the preceding claims, wherein partially or completely removing the organic solvent (A) to obtain the composite article by drying includes drying at a temperature of 50 to 150°C for 1 to 48 hours, preferably drying at 100°C to 120°C for 1 to 48 hours.

10. The method for the preparation of a composite article according to any one of the preceding claims, further comprising a step of coating the composite article with a coating composition comprising a melamine-formaldehyde resin.

11. A composite article obtainable by the method according to any one of the preceding claims.

12. A composite article comprising aerogel particles and a foam, wherein one or more of the following requirements (i) to (v) are fulfilled:

(i) the weight ratio of the one or more aerogels to the one or more foams (aerogel/foam) in the composite article is 1:8 or higher;

(ii) the composite article has a thermal conductivity at 0°C of not higher than 0.030 W/m-K. Preferably, the thermal conductivity at 0°C is not higher than 0.028 W/m·K, more preferably not higher than 0.026 W/m·K, even more preferably not higher than 0.024 W/m·K, still more preferably not higher than 0.022 W/m·K;

(iii) the composite article has a thermal conductivity at 20°C of not higher than 0.032 W/m·K. Preferably, the thermal conductivity at 20°C is not higher than 0.030 W/m-K, more preferably not higher than 0.028 W/m·K, even more preferably not higher than 0.026 W/m·K, still more preferably not higher than 0.024 W/m·K;

(iv) the composite article has a thermal conductivity at 40°C of not higher than 0.034 W/m·K. Preferably, the thermal conductivity at 40°C is not higher than 0.032 W/m·K, more preferably not higher than 0.030 W/m·K, even more preferably not higher than 0.028 W/m·K, still more preferably not higher than 0.026 W/m·K.

(v) the composite article has a burn-through time of 10 minutes or more, wherein the burn-through resistance is determined using the composite article in the form of a 16 cm x 16 cm sheet with a thickness of 8 mm and treating the composite article at the centre of its first major surface by using a propane gas burner (flame source defined in DIN EN ISO 11925-2, Ignitability of products subjected to direct impingement of flame - Part 2: Single-flame source test), wherein the burn-through time is the duration from start of the flame treatment until the flame reaches centre of the second major surface.

13. The composite article according to claim 11 or 12, containing 0.1 to 20 wt.-% melamine resin based on the total weight of the composite article.

Fig. 1

Fig. 2

a)
b)

Fig. 3

a)
b)

Fig. 4

a)

b)

c)

d)

Fig. 5

Europäisches
Patentamt

European
Patent Office

Office européen
des brevets

## EUROPEAN SEARCH REPORT

Application Number

EP 22 19 4398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/112134 A1 (CHEN JEAN-HONG [TW]) 26 April 2018 (2018-04-26) * figure 1 * * paragraphs [0023] – [0027] * | 1-13 | INV. C08J9/42 C08J9/36 C08J9/40 |
| X | US 2012/142802 A1 (STEINKE TOBIAS HEINZ [DE] ET AL) 7 June 2012 (2012-06-07) * paragraphs [0067] – [0071]; example 1 * * paragraphs [0072] – [0074] * | 1-13 | |
| X | US 2016/115685 A1 (BONNARDEL PIERRE-ANTOINE [FR] ET AL) 28 April 2016 (2016-04-28) * examples 1-2 * | 11-13 | |
| X | US 2009/029147 A1 (TANG YUEHUA [US] ET AL) 29 January 2009 (2009-01-29) * example 1 * * claim 34 * | 11,12 | |

TECHNICAL FIELDS
SEARCHED      (IPC)

C08J

The present search report has been drawn up for all claims

| Place of search | Date of completion of the search | Examiner |
|---|---|---|
| The Hague | 25 January 2023 | Mayer, Anne |

EPO FORM 1503 03.82 (P04C01)

## ANNEX TO THE EUROPEAN SEARCH REPORT
## ON EUROPEAN PATENT APPLICATION NO.

EP 22 19 4398

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2023

| Patent document cited in search report | Publication date | Patent family member(s) | Publication date |
|---|---|---|---|
| US 2018112134 A1 | 26-04-2018 | NONE | |
| US 2012142802 A1 | 07-06-2012 | NONE | |
| US 2016115685 A1 | 28-04-2016 | AU 2014280035 A1 | 21-01-2016 |
| | | BR 112015031140 A2 | 25-07-2017 |
| | | CA 2915221 A1 | 18-12-2014 |
| | | CN 105283495 A | 27-01-2016 |
| | | CN 110669251 A | 10-01-2020 |
| | | CN 110684235 A | 14-01-2020 |
| | | DK 3008123 T3 | 03-06-2019 |
| | | EP 3008123 A1 | 20-04-2016 |
| | | EP 3514199 A1 | 24-07-2019 |
| | | ES 2729972 T3 | 07-11-2019 |
| | | FR 3007025 A1 | 19-12-2014 |
| | | HU E043590 T2 | 28-08-2019 |
| | | JP 6224825 B2 | 01-11-2017 |
| | | JP 6417015 B2 | 31-10-2018 |
| | | JP 2016521670 A | 25-07-2016 |
| | | JP 2018039723 A | 15-03-2018 |
| | | KR 20160017067 A | 15-02-2016 |
| | | KR 20180081850 A | 17-07-2018 |
| | | KR 20190100434 A | 28-08-2019 |
| | | KR 20200129201 A | 17-11-2020 |
| | | KR 20220028144 A | 08-03-2022 |
| | | MY 172211 A | 18-11-2019 |
| | | PL 3008123 T3 | 29-11-2019 |
| | | PT 3008123 T | 17-06-2019 |
| | | RU 2016100769 A | 17-07-2017 |
| | | SG 10202002574Q A | 28-05-2020 |
| | | SG 11201510218Q A | 28-01-2016 |
| | | SI 3008123 T1 | 28-06-2019 |
| | | TR 201907748 T4 | 21-06-2019 |
| | | US 2016115685 A1 | 28-04-2016 |
| | | US 2022259850 A1 | 18-08-2022 |
| | | WO 2014198931 A1 | 18-12-2014 |
| US 2009029147 A1 | 29-01-2009 | US 2009029147 A1 | 29-01-2009 |
| | | WO 2007146945 A2 | 21-12-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2722311 A2
- EP 3023528 A1
- WO 1996001867 A1
- EP 0265781 A
- WO 2020142887 A1
- US 4334971 A
- DE 102010009588 A1
- EP 071672 A

- EP 037470 A
- WO 2007029222 A1
- WO 2006024658 A1
- WO 1994013460 A1
- US 4916198 A
- US 4714716 A
- EP 2722311 A

**Non-patent literature cited in the description**

- **HOUBEN-WEYL.** *Methoden der organischen Chemie,* 1963, vol. 14/2, 319-402